(19) **Europäisches Patentamt**
**European Patent Office**
**Office européen des brevets**

(11) **EP 4 058 784 B1**

(12) **EUROPEAN PATENT SPECIFICATION**

(45) Date of publication and mention
of the grant of the patent:
**19.03.2025  Bulletin 2025/12**

(21) Application number: **19832170.5**

(22) Date of filing: **15.11.2019**

(51) International Patent Classification (IPC):
**G01N 21/35** *(2014.01)*   **G01N 33/50** *(2006.01)*
**G01N 15/14** *(2024.01)*   **G01J 3/453** *(2006.01)*
**G01N 21/65** *(2006.01)*   **G01N 15/10** *(2024.01)*

(52) Cooperative Patent Classification (CPC):
**G01N 15/1456;** G01J 3/453; G01N 21/65;
G01N 2015/1006; G01N 2021/3595

(86) International application number:
**PCT/GB2019/053245**

(87) International publication number:
**WO 2021/094703 (20.05.2021 Gazette 2021/20)**

(54) **METHOD FOR DETECTING LUNG CANCER**

VERFAHREN ZUM NACHWEIS VON LUNGENKREBS

PROCÉDÉ DE DÉTECTION DU CANCER DU POUMON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.09.2022  Bulletin 2022/38**

(73) Proprietor: **Sierra Medical Ltd**
**Barleythorpe**
**Oakham**
**Rutland LE15 7WD (GB)**

(72) Inventors:
• **FOREMAN, Liberty**
**Rutland  LE15 7WD (GB)**
• **FARR, Lance**
**Rutland  LE15 7WD (GB)**

(74) Representative: **McShane, Andrea Renata**
**Mathys & Squire**
**The Shard**
**32 London Bridge Street**
**London SE1 9SG (GB)**

(56) References cited:
**WO-A1-2012/001370      US-A1- 2008 241 954
US-A1- 2011 311 970**

• **CHARLES A. SMITH ET AL: "A simple correction
for cell autofluorescence for multiparameter cell-
based analysis of human solid tumors",
CYTOMETRY. PART B, CLINICAL CYTOMETRY,
vol. 70B, no. 2, 1 January 2006 (2006-01-01) - 1
January 2006 (2006-01-01), US, pages 91 - 103,
XP055337557, ISSN: 1552-4949, DOI: 10.1002/
cyto.b.20090**
• **ZHIWEI HUANG ET AL: "Near-infrared Raman
spectroscopy for optical diagnosis of lung
cancer", INTERNATIONAL JOURNAL OF
CANCER, vol. 107, no. 6, 20 December 2003
(2003-12-20), US, pages 1047 - 1052,
XP055716563, ISSN: 0020-7136, DOI: 10.1002/
ijc.11500**
• **P D LEWIS ET AL: "R Evaluation of FTIR
Spectroscopy as a diagnostic tool for lung
cancer using sputum Background", 23
November 2010 (2010-11-23), XP055716564,
Retrieved from the Internet <URL:https://
bmccancer.biomedcentral.com/track/pdf/
10.1186/1471-2407-10-640> [retrieved on
20200720]**

• EWA KAZNOWSKA ET AL: "Application of infrared spectroscopy for the identification of squamous cell carcinoma (lung cancer). Preliminary study", INFRARED PHYSICS AND TECHNOLOGY., vol. 89, 1 March 2018 (2018-03-01), GB, pages 282 - 290, XP055716565, ISSN: 1350-4495, DOI: 10.1016/ j.infrared.2018.01.021

• KAMINAKA S ET AL: "NEAR-INFRARED MULTICHANNEL RAMAN SPECTROSCOPY TOWARD REAL-TIME IN VIVO CANCER DIAGNOSIS", JOURNAL OF RAMAN SPECTROSCOPY, XX, XX, vol. 33, no. 7, 1 July 2002 (2002-07-01), pages 498 - 502, XP009030164, DOI: 10.1002/JRS.903

# Description

The present invention relates to detecting lung cancer.

Lung cancer can be detected for example by X-ray imaging (including tomographic imaging) or by taking biopsies of lung tissue.

The article "Near-infrared Raman spectroscopy for optical diagnosis of lung cancer"; ZHIWEI HUANG ET AL; INTERNATIONAL JOURNAL OF CANCER; vol. 107, no. 6; 2003-12-20, pages 1047-1052 discloses a diagnostic method for determining lung cancer using NIR Raman spectroscopy in which a scatter plot distribution of the intensity ratio of the Raman signal respectively at 1445 $cm^{-1}$ and at 1655 $cm^{-1}$ is used as a metric to separate cancerous lung tissue from normal lung tissue.

It is an object of the present invention to enable detecting lung cancer and other respiratory diseases more conveniently, less invasively, at an earlier stage, and more reliably than other approaches.

According to a first aspect there is provided a diagnostic method for determining lung disease as set out in the appended set of claims.

A distribution can provide a distinction that can be indicative of a lung disease, and can enable less invasive, more convenient, reliable early stage identification of lung disease (or a subject being at risk of lung disease).

Lung disease may be diagnosed in case the distribution is asymmetric. Asymmetric distribution can be particularly indicative of lung disease or risk of lung disease.

The method may further comprise determining a ratio of outliers to non-outliers in the distribution of features of interest, and determining asymmetry based on the ratio. Such a ratio can provide a measure of the distribution and can be selected to provide a target sensitivity and/or specificity.

The distribution may be asymmetric in case the ratio of outliers to non-outliers is above a threshold. The threshold may be at least 0.05, preferably at least 0.1, preferably at least 0.15. The threshold can be selected to provide a target sensitivity and/or specificity.

The outliers may be determined in dependence on a one-sided boundary, or alternatively a two-sided boundary. The one-sided boundary, or the two-sided boundary, may be determined in dependence on a mean of the features of interest and/or in dependence on a standard deviation of the features of interest. The boundary can be selected to provide a target sensitivity and/or specificity.

The method may further comprise determining an asymmetry measure of the distribution of features of interest, and determining asymmetry based on the asymmetry measure. The asymmetry measure may be a skew, a Pearson's skew, and/or a kurtosis.

Lung disease may be diagnosed in case the distribution has a spread above a threshold. A distribution with a high spread, whether symmetric or asymmetric, can be particularly indicative of lung disease or risk of lung disease.

The method may further comprise determining a ratio of outliers to non-outliers in the distribution of features of interest, and determining a spread above a threshold based on the ratio. Such a ratio can provide a measure of the spread and can be selected to provide a target sensitivity and/or specificity. The outliers are preferably determined in dependence on a two-sided boundary. The two-sided boundary may be determined in dependence on a mean of the features of interest and/or in dependence on a standard deviation of the features of interest.

The method may further comprise determining a standard deviation as measure of the spread, wherein lung disease is diagnosed in case the standard deviation is above a threshold. Other measures of the spread may be used, including: a full width at half maximum for a histogram of the distribution; a range between top and bottom e.g. quartiles, deciles, or percentiles; a mean absolute deviation; or a combination of two or more measures of the spread.

For convenience and low invasiveness the plurality of cells may be from the upper respiratory tract. The plurality of cells are preferably buccal cells.

The spectroscopic interrogations may be one or more of: infrared spectroscopic interrogations, Fourier-transform infrared spectroscopic interrogations. The spectra are preferably absorbance spectra or derivatives thereof.

Preferably at least 20 spectra are obtained with each spectrum from a different cell, preferably at least 50 spectra with each spectrum from a different cell, more preferably at least 75 spectra with each spectrum from a different cell, yet more preferably at least 100 spectra with each spectrum from a different cell.

The feature of interest may be: a peak area in a spectroscopic band of interest; a mean value, an ordinary arithmetic mean, a weighted arithmetic mean or a centroid within a spectroscopic band of interest; a value at a wavenumber of interest; and/or a wavenumber at which a spectroscopic maximum or minimum occurs within a spectroscopic band of interest.

The spectroscopic band of interest or wavenumber of interest may be one or more of: in the region of 1150 $cm^{-1}$; between 1140 and 1160 $cm^{-1}$; in the region of 1080 $cm^{-1}$; between 1070 and 1090 $cm^{-1}$; in the region of 1065 $cm^{-1}$; between 1060 and 1070 $cm^{-1}$; in the region of 1050 $cm^{-1}$; and between 1060-1070 $cm^{-1}$.

The feature of interest may be a combination of two or more of the features of interest as aforementioned.

The lung disease may be lung cancer or a non-cancerous respiratory disease, optionally a chronic obstructive pulmonary disease.

Preferably each spectroscopic interrogation is of a portion of a single cell, preferably of a portion of a single cell including the nucleus. The portion may include cytoplasm.

The method may further comprise normalising spectra to an amide II peak height and/or calculating second derivatives of the spectra.

According to another aspect there is provided a computer program comprising code means to cause a system comprising a computer and spectrometer to carry out a method as aforementioned.

According to another aspect there is provided a computer readable medium carrying a computer program as aforementioned.

According to another aspect of the present disclosure there is provided a system comprising a computer and a spectrometer.

According to another aspect of the present disclosure there is provided a computer program and a computer program product. According to another aspect of the present disclosure there is provided a non-transitory computer readable medium having stored thereon a program. According to another aspect of the present disclosure there is provided a computer program product comprising software code. Features implemented in hardware may generally be implemented in software, and vice versa. Any reference to software and hardware features herein should be construed accordingly.

As used herein, means plus function features may be expressed alternatively in terms of their corresponding structure, such as a suitably programmed processor and associated memory.

These and other aspects of the present invention will become apparent from the following exemplary embodiments that are described with reference to the following figures in which:

> Figure 1 is a plot of the peak areas for spectra from samples from a number of subjects; and
> Figure 2 is a plot of the proportion of outliers compared to non-outliers for each sample.

A sample of buccal cells is collected from a subject and fixed for example in 4% formaldehyde or 10% neutral buffered formalin (NBF) for 20 mins. The cell suspensions are cytospun onto substrates suitable for IR transmission, for example calcium fluoride (CaF2) or zinc selenide (ZnSe) IR windows, e.g. 1 mm thick and 22 mm in diameter. Other suitable protocols for cell preparation may be used; for example cytospinning may be omitted, the cells may be permitted to sediment; excess fluid may be evaporated off; or cells may be smeared directly onto a window.

The sample of buccal cells is analysed with a suitable FTIR instrument. In an example, the sample is analysed with benchtop FTIR spectrometer with a conventional (globar) light source. Suitable examples include a Perkin Elmer Spotlight 200i FT-IR microscope coupled to a Frontier spectrometer controlled with Spectrum 10 software; or a ThermoFischer Scientific, Nicolet iN10 Mx Infrared Imaging Microscope controlled with OMIC Picta software can be used. A benchtop FTIR spectrometer may be cooled with liquid nitrogen and may have a mercury cadmium telluride (MCT) detector. Examples of suitable IR detectors include a liquid nitrogen-cooled mercury cadmium telluride (MCT) single element detector or a liquid nitrogen-cooled FPA detector in 64x64 array. In an example single point transmission measurements are recorded using a 15 x 15 $\mu$m aperture. A larger aperture may be selected to interrogate a larger portion of a cell. An aperture may be selected to cover substantially an entire cell. The aperture is advantageously selected smaller than the cell diameter in order to minimise Mie scattering.

Single point transmission measurements are taken for 100 individual non-apoptotised, undamaged cells per sample, selected at random (e.g. manually, or automatically with cell identification by automated image processing) from the sample of buccal cells. The measurement interrogates a portion of a single cell focusing on the nucleus, the portion preferably including the nucleus and some of the cytoplasm (in a variant the portion may include only nucleus, or only cytoplasm). Data are recorded at room temperature between 4000-600 cm$^{-1}$ and the system is optimised to maximise signal at 1800-1000 cm$^{-1}$. 16 interferograms are averaged at 4 cm$^{-1}$ resolution before Fourier transformation. Absorbance spectra are calculated using as reference a background measurement (16 interferograms averaged at 4 cm$^{-1}$ resolution) taken from a clear area of the window. Background spectra are recorded for example before the first cell measurement and then after every 15 cells.

Other examples of benchtop 'FTIR spectrometer systems include a Bruker HYPERION 3000 FTIR Microscope coupled with a INVENIO spectrometer and OPUS software, or a Shimadzu AIM-9000 Microscope coupled with an IRTracer-100 spectrometer and AIMsolution software.

In a variant a synchrotron light source is used rather than a benchtop FTIR spectrometer with a conventional (globar) light source as described above. In an example a synchrotron light source is provided by the Diamond Light Source (Harwell Science and Innovation Campus, Didcot) using FTIR microspectroscopy at beamline 22. In this example FTIR data are recorded using a Bruker IFS 66s spectrometer, fitted with a KBr beamsplitter and coupled to a Bruker Hyperion 3000 microscope with a suitable IR detector, operated in an example with OPUS 7.0. A white light image is recorded using a 36x objective on the microscope.

A variety of alternatives for sample analysis to obtain FTIR data are possible, for example a 30 x 30 $\mu$m aperture may be used, background readings may be taken every 5 mins while taking measurements, 256 interferograms or more may be averaged, amongst many other alternatives know to the person skilled in the art.

Absorbance spectra data may be pre-processed. Absorbance spectra data can be pre-processed to normalise absorbance spectra, for example to the amide II peak height between 1465 and 1575 cm⁻¹. Absorbance spectra data can be pre-processed to calculate the second derivatives, for example using 13 point Savitzky-Golay smoothing in order to narrow broad peaks and correct any baseline drift. Alternative procedures to normalise spectra and/or find a suitable derivative of the spectra may be used, as are well known in the art. Pre-processing may also include the steps of water subtraction, water vapour subtraction and/or baseline correction, as are well known in the art.

Specific bands of interest within the 1200 - 900 cm⁻¹ region show particularly large differences between normalised spectra of samples from patients with cancer and samples from healthy subjects. An example of four bands of interest is: 1140-1160 cm⁻¹; 1070-1090 cm⁻¹; 1060-1070 cm⁻¹; and 1040-1060 cm⁻¹;. Another example of bands of interest includes a band in the region of 1050 cm⁻¹, a band in the region of 1065 cm⁻¹, a band in the region of 1080 cm⁻¹ and a band in the region of 1150 cm⁻¹.

The means and standard deviations of the cancer group and the healthy group may be analysed to determine bands with particularly large differences.

For bands of interest the peak area of individual spectra within the band are determined. A straight line is defined between the start and end points of a normalised second derivative spectrum within that band. The area between the straight line and the peak/trough of the normalised second derivative spectrum in the band of interest is calculated (referred to as the peak area).

The peak areas of the spectra are analysed to identify samples from patients with cancer.

Chi-squared testing of the calculated peak areas for a set of measurements from a sample (including data from around 100 individual cell spectra from the same patient) is performed to determine if the data is normally distributed. Across different subjects, some with lung cancer and some without lung cancer, it is observed that many of the sets of measurements have data that is not normally distributed. Wilcoxon rank-sum analysis is performed to show that the data from different patients have similar or dissimilar distribution. It is observed that many of the patients have data with dissimilar distributions.

It is observed that the distribution of peak areas from a sample belonging to a control group (subjects without lung cancer) and the distribution of peak areas from a sample belonging to a cancer group (subjects with lung cancer) is dissimilar. The spectra of a particular sample, with a number of spectra from a random selection of cells, form a cluster with a number of outliers. For the control group the cluster is typically narrower, the outliers are fewer, and the distribution is relatively symmetric; for the cancer group the cluster is more distributed and the number of outliers is greater and the asymmetry is more pronounced. It is thought that of the random selection of cells from a sample a proportion is altered in cancer patients, and therefore the spectra distribution becomes shifted.

In order to distinguish a sample from a subject without lung cancer from a sample from a subject with lung cancer, a variety of measures of the distribution can be used. For example, for a set of measurements from a sample (i.e. for around 100 individual cell spectra from the same patient) the proportion of outliers compared to non-outliers, with reference to a particular boundary, can give a suitable measure for the distribution.

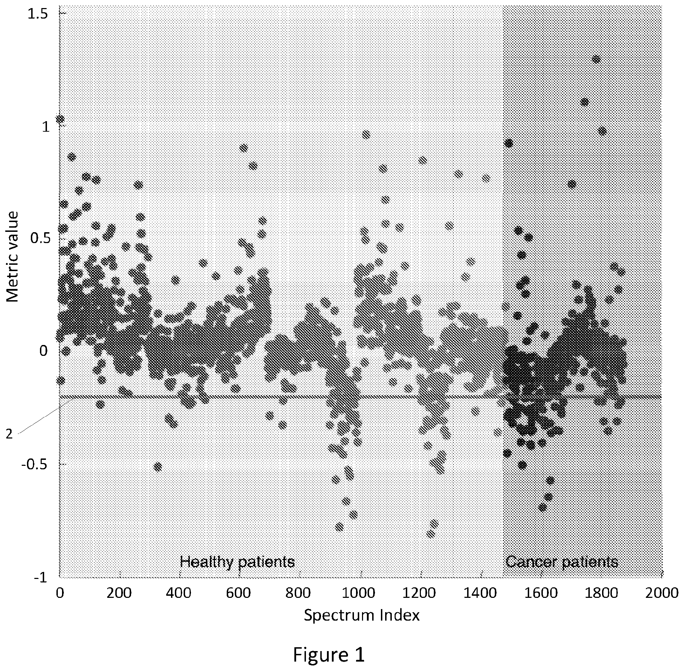

Figure 1 shows a plot of the peak areas in a band of interest of 1059 to 1073 cm⁻¹ for each cell reading from each sample, across a number of subjects (with or without lung cancer). The y-axis is a metric value that represents the peak area, with the average for each sample (i.e. for a cluster of around 100 individual cell spectra) calibrated at 0. The x-axis is the spectrum index number. Spectrum index numbers 1 to ca 1475 are from samples from healthy subjects, and the remaining spectra (with darker shading) are from samples from subjects with lung cancer. Spectra from the same sample (i.e. from the same patient) form a set with consecutive index numbers spanning about 100 index numbers.

Figure 1 shows a boundary 2 that is defined to distinguish outliers. The boundary 2 is selected to optimise the distinction, and in the example shown in Figure 1 is at -0.2 peak area metric value units. In another example the boundary is at -0.08.

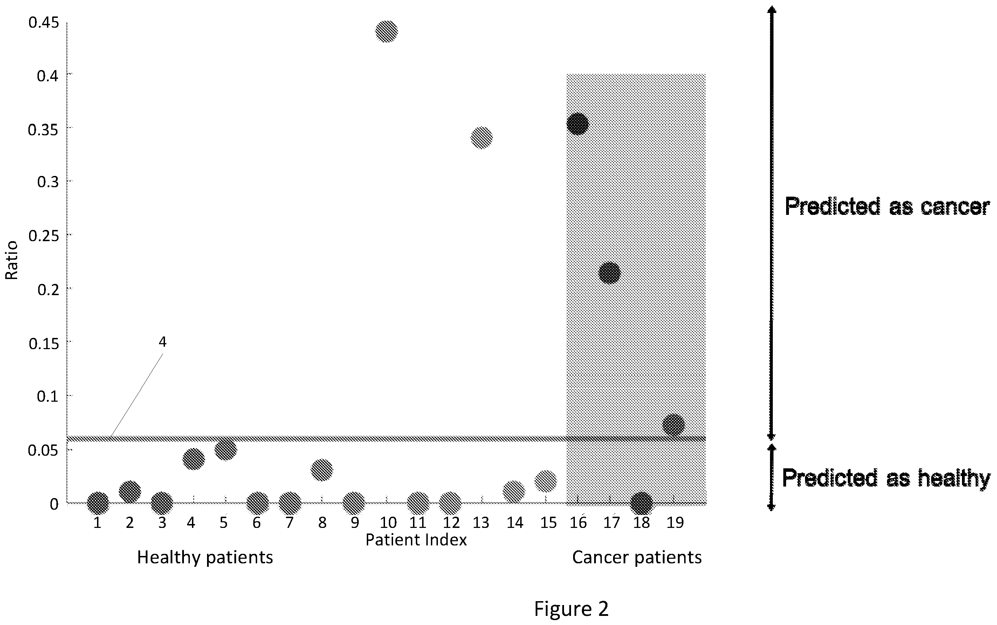

Figure 2 shows a plot of the proportion of outliers compared to non-outliers for each sample (i.e. set of data from the same patient). The proportions relate to the data of Figure 1 with the boundary 2 indicated in Figure 1. The y-axis is the ratio, and the x-axis is the patient index number. Patient index numbers 1 to 15 are from samples belonging to the healthy group, and the remaining patient index numbers (with darker shading) are from samples belonging to the cancer group.

Figure 2 shows a threshold 4 that is defined to distinguish the control from the cancer group. The threshold 4 is selected to optimise the distinction, and in the example shown in Figure 2 is at 0.057. In another example the threshold is at 0.14.

The distinction illustrated in the examples correctly classifies 3 of the 4 cancer samples, and correctly classifies 13 of the 15 healthy samples. A sensitivity of 75% and a specificity of 87% is observed. In other examples the classifier correctly identifies patients with cancer with a sensitivity 60% and specificity 77.8%, and in other examples the sensitivity is 60% and the specificity is 66%.

It is known that smoking can be a confounding factor in the analysis of samples from the respiratory pathway. It is however observed that samples obtained from subjects who are smokers and are without lung cancer show the same pattern as samples obtained from subjects who are not smokers and are without lung cancer. The distinction between samples from subjects with or without lung cancer is not affected by whether or not the subject is a smoker.

It is known that chronic obstructive pulmonary diseases can be a confounding factor in the analysis of samples from the respiratory pathway. It is however observed that samples obtained from subjects without cancer but with a non-cancerous respiratory disease (including chronic obstructive pulmonary diseases) are distinct from samples obtained from subjects with lung cancer. Samples obtained from subjects with a non-cancerous respiratory disease may show a different distribution than samples obtained from subjects without a respiratory disease.

In the illustrated example a sample of buccal cells is collected and analysed. The sample of buccal cells can be collected by a buccal swab or an oral wash. In a variant the sample is collected from one or more sites in the upper respiratory tract, including other mouth, dental or tongue tissue (e.g. by swab collection), sputum, saliva, or throat, nose or pernasal tissue (e.g. by swab collection).

In the illustrated example the boundary 2 and the threshold 4 are selected based on the data shown in figures 1 and 2. For setting a boundary and a threshold a 2D optimisation may be performed algorithmically; the boundary and threshold can be selected in dependence on the trade-off between sensitivity and specificity, i.e. to optimise either sensitivity or specificity or to find the most suitable balance between sensitivity or specificity for a particular usage scenario (e.g. pre-screening or as part of a suite of tests).

In the illustrated example the boundary is a one-sided boundary, and only outliers on one side of a cluster are considered, but in an alternative the boundary is a two-sided boundary, one on either side of the cluster, and outliers on either side of the cluster are considered.

In the illustrated example only a band of interest is considered for the classification, but in an alternative two or more bands of interest are considered.

In the illustrated example the peak area in a particular band of interest is determined and analysed, but a variety of alternative measures can be used to quantify features of interest in a spectrum. Some examples include

- an absorbance (or a derivative of the absorbance) at a specific wavenumber
- a mean of the absorbance (or of a derivative of the absorbance) over a range of wavenumbers (a band of interest); the mean may be an ordinary arithmetic mean or a weighted arithmetic mean;
- a peak position, i.e. a wavenumber at which a peak or trough absorbance (or a derivative of the absorbance) occurs within a band of interest;
- a centroid of the absorbance (or a derivative of the absorbance) over a range of wavenumbers (a band of interest).

A combination of two or more of the measures quantifying features of interest in a spectrum may be used.

Other measures to quantify the distribution, and thereby to distinguish the control from the cancer group, include for example:

a standard deviation $\sigma$:

$$\sigma = \sqrt{\frac{1}{N} \sum_i (x_i - \bar{x})^2}$$

a full width at half maximum for a histogram of the distribution; a range between top and bottom e.g. quartiles, deciles, or percentiles;

a mean absolute deviation s:

$$s = \frac{1}{N} \sum_i |x_i - \bar{x}|$$

a skew $\gamma$:

$$\gamma = \frac{1}{N\sigma^3} \sum_i (x_i - \bar{x})^3$$

a Pearson's skew:

$$Skew = \frac{mean - mode}{\sigma}$$

a kurtosis c:

$$c = \left( \frac{1}{N\sigma^4} \sum_i (x_i - \bar{x})^4 \right) - 3$$

with N elements in the set of data $\{x_1 \ldots x_n\}$, and ordinary arithmetic mean $\bar{x}$.

In the illustrated example infrared spectroscopy data is used. Various other modifications will be apparent to those skilled in the art.

It will be understood that the present invention has been described above purely by way of example, and modifications of detail can be made within the scope of the invention.

The term 'comprising' as used in this specification and claims preferably means 'consisting at least in part of'.

**Claims**

1. A diagnostic method for determining lung disease comprising:

    obtaining a plurality of spectra produced by infrared spectroscopic interrogations of a plurality of cells obtained from a subject, with each spectrum obtained from a different cell;

    determining a feature of interest from each infrared spectrum of the plurality of spectra; determining a distribution of the features of interest; and

    diagnosing a lung disease in dependence on the distribution of features of interest.

2. A diagnostic method according to Claim 1 wherein lung disease is diagnosed in case the distribution is asymmetric.

3. A diagnostic method according to Claim 2 further comprising determining a ratio of outliers to non-outliers in the distribution of features of interest, and determining asymmetry based on the ratio.

4. A diagnostic method according to Claim 3 wherein the distribution is asymmetric in case the ratio of outliers to non-outliers is above a threshold, preferably wherein the outliers are determined in dependence on a one-sided boundary.

5. A diagnostic method according to any of Claims 2 to 4 further comprising determining an asymmetry measure of the distribution of features of interest, and determining asymmetry based on the asymmetry measure, preferably wherein the asymmetry measure is a skew, a Pearson's skew, and/or a kurtosis.

6. A diagnostic method according to any preceding claim wherein lung disease is diagnosed in case the distribution has a spread above a threshold.

7. A diagnostic method according to Claim 6 further comprising determining a ratio of outliers to non-outliers in the distribution of features of interest, and determining a spread above a threshold based on the ratio, preferably wherein the outliers are determined in dependence on a two-sided boundary.

8. A diagnostic method according to any of Claims 6 to 7, further comprising determining a standard deviation as measure of the spread, wherein lung disease is diagnosed in case the standard deviation is above a threshold.

9. A diagnostic method according to any preceding claim wherein the plurality of cells are from the upper respiratory tract, preferably wherein the plurality of cells are buccal cells.

10. A diagnostic method according to any preceding claim wherein the feature of interest is a peak area in a spectroscopic band of interest; or a mean value, an ordinary arithmetic mean, a weighted arithmetic mean or a centroid within a spectroscopic band of interest; or a value at a wavenumber of interest; or a wavenumber at which a spectroscopic maximum or minimum occurs within a spectroscopic band of interest; or a combination of two or more of these features of interest.

11. A diagnostic method according to Claim 10 wherein the spectroscopic band of interest or wavenumber of interest is one or more of: in the region of 1150 cm-1; between 1140 and 1160 cm-1; in the region of 1080 cm-1; between 1070 and 1090 cm-1; in the region of 1065 cm-1; between 1060 and 1070 cm-1; in the region of 1050 cm-1; and between 1060-1070 cm-1.

12. A diagnostic method according to any preceding claim wherein the lung disease is lung cancer or a non-cancerous respiratory disease, optionally a chronic obstructive pulmonary disease.

13. A diagnostic method according to any preceding claim wherein each infrared spectroscopic interrogation is of a portion of a single cell, preferably of a portion of a single cell including the nucleus and optionally cytoplasm.

14. A computer program comprising code means to cause a system comprising a computer and spectrometer to carry out a method according to any preceding claim.

15. A computer readable medium carrying a computer program according to claim 14.

**Patentansprüche**

1. Ein Diagnoseverfahren zum Bestimmen einer Lungenerkrankung, umfassend:

    Erhalten einer Vielzahl von Spektren, die durch infrarot-spektroskopische Abfragen einer Vielzahl von Zellen, die von einem Subjekt erhalten werden, produziert werden, wobei jedes Spektrum von einer anderen Zelle erhalten wird;

    Bestimmen eines Merkmals von Interesse von jedem Infrarotspektrum der Vielzahl von Spektren;

    Bestimmen einer Verteilung der Merkmale von Interesse; und

    Diagnostizieren einer Lungenerkrankung in Abhängigkeit von der Verteilung von Merkmalen von Interesse.

**2.** Diagnoseverfahren gemäß Anspruch 1, wobei eine Lungenerkrankung diagnostiziert, falls die Verteilung asymmetrisch ist.

**3.** Diagnoseverfahren gemäß Anspruch 2, das ferner das Bestimmen eines Verhältnisses von Ausreißern zu Nicht-Ausreißern in der Verteilung von Merkmalen von Interesse und das Bestimmen einer Asymmetrie basierend auf dem Verhältnis umfasst.

**4.** Diagnoseverfahren gemäß Anspruch 3, wobei die Verteilung asymmetrisch ist, falls das Verhältnis von Ausreißern zu Nicht-Ausreißern über einem Schwellenwert liegt, wobei bevorzugt die Ausreißer in Abhängigkeit von einer einseitigen Begrenzung bestimmt werden.

**5.** Diagnoseverfahren gemäß einem der Ansprüche 2 bis 4, das ferner das Bestimmen eines Asymmetriemaßes der Verteilung von Merkmalen von Interesse und das Bestimmen einer Asymmetrie basierend auf dem Asymmetriemaß umfasst, wobei bevorzugt das Asymmetriemaß eine Schiefe, Pearson-Schiefe und/oder eine Kurtosis ist.

**6.** Diagnoseverfahren gemäß einem vorhergehenden Anspruch, wobei eine Lungenerkrankung diagnostiziert wird, falls die Verteilung eine Ausbreitung über einem Schwellenwert aufweist.

**7.** Diagnoseverfahren gemäß Anspruch 6, das ferner das Bestimmen eines Verhältnisses von Ausreißern zu Nicht-Ausreißern in der Verteilung von Merkmalen von Interesse und das Bestimmen einer Ausbreitung über einem Schwellenwert basierend auf dem Verhältnis umfasst, wobei bevorzugt die Ausreißer in Abhängigkeit von einer zweiseitigen Begrenzung bestimmt werden.

**8.** Diagnoseverfahren gemäß einem der Ansprüche 6 bis 7, das ferner das Bestimmen einer Standardabweichung als Maß der Ausbreitung umfasst, wobei eine Lungenerkrankung diagnostiziert wird, falls die Standardabweichung über einem Schwellenwert liegt.

**9.** Diagnoseverfahren gemäß einem vorhergehenden Anspruch, wobei die Vielzahl von Zellen von dem oberen Respirationstrakt sind, wobei bevorzugt die Vielzahl von Zellen bukkale Zellen sind.

**10.** Diagnoseverfahren gemäß einem vorhergehenden Anspruch, wobei das Merkmal von Interesse Folgendes ist: ein Spitzenbereich in einem spektroskopischen Band von Interesse; oder ein Mittelwert, ein gewöhnliches arithmetisches Mittel, ein gewogenes arithmetisches Mittel oder ein Zentroid innerhalb eines spektroskopischen Bands von Interesse; oder ein Wert bei einer Wellenzahl von Interesse; oder eine Wellenzahl, bei der ein spektroskopisches Maximum oder Minimum innerhalb eines spektroskopischen Bands von Interesse auftritt; oder eine Kombination aus zwei oder mehr dieser Merkmale von Interesse.

**11.** Diagnoseverfahren gemäß Anspruch 10, wobei das spektroskopische Band von Interesse oder die Wellenzahl von Interesse eines oder mehr von Folgendem ist: in der Region von 1150 cm-1; zwischen 1140 und 1160 cm-1; in der Region von 1080 cm-1; zwischen 1070 und 1090 cm-1; in der Region von 1065 cm-1; zwischen 1060 und 1070 cm-1; in der Region von 1050 cm-1; und zwischen 1060-1070 cm-1.

**12.** Diagnoseverfahren gemäß einem vorhergehenden Anspruch, wobei die Lungenerkrankung ein Lungenkrebs oder eine respiratorische Nicht-Krebserkrankung, optional eine chronische obstruktive pulmonale Erkrankung ist.

**13.** Diagnoseverfahren gemäß einem vorhergehenden Anspruch, wobei jede infrarot-spektroskopische Abfrage von einem Abschnitt einer einzelnen Zelle ist, bevorzugt von einem Abschnitt einer einzelnen Zelle, die den Kern und optional das Zytoplasma einschließt.

**14.** Ein Computerprogramm, das ein Codemittel umfasst, um ein System, das einen Computer und ein Spektrometer umfasst, zu veranlassen, ein Verfahren gemäß einem vorhergehenden Anspruch vorzunehmen.

**15.** Ein computerlesbares Medium, das ein Computerprogramm gemäß Anspruch 14 enthält.

**Revendications**

**1.** Procédé de diagnostic permettant de déterminer une maladie pulmonaire comprenant :

l'obtention d'une pluralité de spectres produits par des interrogations spectroscopiques infrarouges d'une pluralité de cellules obtenues à partir d'un sujet, chaque spectre étant obtenu à partir d'une cellule différente ;
la détermination d'une caractéristique d'intérêt à partir de chaque spectre infrarouge de la pluralité de spectres ;
la détermination d'une distribution des caractéristiques d'intérêt ; et
le diagnostic d'une maladie pulmonaire en fonction de la distribution des caractéristiques d'intérêt.

**2.** Procédé de diagnostic selon la revendication 1, dans lequel une maladie pulmonaire est diagnostiquée dans le cas où la distribution est asymétrique.

**3.** Procédé de diagnostic selon la revendication 2, comprenant en outre la détermination d'un rapport entre des valeurs aberrantes et des valeurs non aberrantes dans la distribution de caractéristiques d'intérêt, et la détermination d'une asymétrie sur la base du rapport.

**4.** Procédé de diagnostic selon la revendication 3, dans lequel la distribution est asymétrique dans le cas où le rapport entre des valeurs aberrantes et des valeurs non aberrantes est supérieur à un seuil, de préférence dans lequel les valeurs aberrantes sont déterminées en fonction d'une limite unilatérale.

**5.** Procédé de diagnostic selon l'une quelconque des revendications 2 à 4, comprenant en outre la détermination d'une mesure d'asymétrie de la distribution de caractéristiques d'intérêt, et la détermination de l'asymétrie sur la base de la mesure d'asymétrie, de préférence dans lequel la mesure d'asymétrie est un coefficient d'asymétrie, un coefficient d'asymétrie de Pearson, et/ou un coefficient d'aplatissement.

**6.** Procédé de diagnostic selon l'une quelconque des revendications précédentes, dans lequel une maladie pulmonaire est diagnostiquée dans le cas où la distribution présente une dispersion supérieure à un seuil.

**7.** Procédé de diagnostic selon la revendication 6, comprenant en outre la détermination d'un rapport entre des valeurs aberrantes et des valeurs non aberrantes dans la distribution de caractéristiques d'intérêt, et la détermination d'une dispersion supérieure à un seuil sur la base du rapport, de préférence dans lequel les valeurs aberrantes sont déterminées en fonction d'une limite bilatérale.

**8.** Procédé de diagnostic selon l'une quelconque des revendications 6 à 7, comprenant en outre la détermination d'un écart type comme mesure de la dispersion, dans lequel la maladie pulmonaire est diagnostiquée dans le cas où l'écart type est supérieur à un seuil.

**9.** Procédé de diagnostic selon l'une quelconque des revendications précédentes, dans lequel la pluralité de cellules provient des voies respiratoires supérieures, de préférence dans lequel la pluralité de cellules sont des cellules buccales.

**10.** Procédé de diagnostic selon l'une quelconque des revendications précédentes, dans lequel la caractéristique d'intérêt est une zone de pic dans une bande spectroscopique d'intérêt ; ou une valeur moyenne, une moyenne arithmétique ordinaire, une moyenne arithmétique pondérée ou un centroïde dans une bande spectroscopique d'intérêt ; ou une valeur à un nombre d'onde d'intérêt ; ou un nombre d'onde auquel un maximum ou un minimum spectroscopique se produit dans une bande spectroscopique d'intérêt ; ou une combinaison de deux de ces caractéristiques d'intérêt ou plus.

**11.** Procédé de diagnostic selon la revendication 10, dans lequel la bande spectroscopique d'intérêt ou le nombre d'onde d'intérêt est l'un ou plusieurs parmi : dans la région de 1150 cm-1 ; entre 1140 et 1160 cm-1 ; dans la région de 1080 cm-1 ; entre 1070 et 1090 cm-1 ; dans la région de 1065 cm-1 ; entre 1060 et 1070 cm-1 ; dans la région de 1050 cm-1 ; et entre 1060 et 1070 cm-1.

**12.** Procédé de diagnostic selon l'une quelconque des revendications précédentes, dans lequel la maladie pulmonaire est un cancer du poumon ou une maladie respiratoire non cancéreuse, éventuellement une maladie pulmonaire obstructive chronique.

**13.** Procédé de diagnostic selon l'une quelconque des revendications précédentes, dans lequel chaque interrogation spectroscopique infrarouge porte sur une partie d'une cellule unique, de préférence sur une partie d'une cellule unique incluant le noyau et éventuellement le cytoplasme.

**14.** Programme informatique comprenant des moyens de code pour amener un système comprenant un ordinateur et un spectromètre à mettre en œuvre un procédé selon l'une quelconque des revendications précédentes.

**15.** Support lisible par ordinateur contenant un programme informatique selon la revendication 14.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHIWEI HUANG et al.** Near-infrared Raman spectroscopy for optical diagnosis of lung cancer. *INTERNATIONAL JOURNAL OF CANCER*, 20 December 2003, vol. 107 (6), 1047-1052